# EUROPÄISCHE PATENTSCHRIFT

(11) **EP 3 109 368 B1**
(45) Veröffentlichungstag und Bekanntmachung des Hinweises auf die Patenterteilung: **27.09.2017**
(21) Anmeldenummer: 15174027.1
(22) Anmeldetag: 26.06.2015
(51) Int. Cl.: E03F 5/10

(54) **ABFLUSSMENGENREGLER**
FLOW RATE REGULATOR
REGULATEUR DE DEBIT D'ECOULEMENT

(43) Veröffentlichungstag der Anmeldung: 28.12.2016
(73) Patentinhaber: Steinhardt, Jörg-Michael, 65232 Taunusstein (DE)
(72) Erfinder: Steinhardt, Jörg-Michael, 65232 Taunusstein (DE)
(74) Vertreter: Quermann, Helmut

(56) Entgegenhaltungen:
- EP-A1- 1 669 499
- EP-A2- 1 672 132
- DE-A1- 3 338 793
- US-A- 2 062 390
- US-A- 2 150 359

## Beschreibung

Die Erfindung betrifft einen Abflussmengenregler für einen Auslauf eines Flüssigkeitsbehälters, insbesondere für den Auslauf eines Beckens, mit einem Schwimmer, einem (ersten) Zugmittelgetriebe und einer Blende, wobei das Zugmittelgetriebe ein Zugmittel und zwei mit diesem zusammenwirkende Räder aufweist, sowie das eine (erste) Rad mittels des Schwimmers antreibbar ist und die Blende mittels des anderen (zweiten) Rades antreibbar ist.

Bei dem Flüssigkeitsbehälter handelt es sich beispielsweise um ein Regenrückhaltebecken, ein Hochwasserbecken, eine Zisterne, ein Abscheidebecken.

Bei Regenrückhaltungen und anderen Speicherräumen wird die ablaufende Wassermenge im Allgemeinen durch Verminderung der Querschnittsfläche einer Auslauföffnung der Regenrückhaltung bzw. des Speicherraums, allgemein des Flüssigkeitsbehälters geregelt. Das Abblenden der Auslauföffnung darf jedoch nicht direkt proportional der Wasserhöhe, somit linear erfolgen, sondern muss mit zunehmender Stauhöhe gesteuert werden, in Richtung auf eine weniger rasche Abblendung, und unter Einberechnung der Anströmgeschwindigkeit, um einen definierten, im zumindest nahezu konstanten Abfluß zu gewährleisten.

Ein Abflussmengenregler der eingangs genannten Art ist aus der DE 33 27 404 A1 bekannt. Bei dieser ist der Schwimmer fest mit einer Schwimmerstange verbunden, die drehfest mit dem ersten Rad des Zugmittelgetriebes verbunden ist. Bei dem Zugmittelgetriebe handelt es sich insbesondere um ein Ketten- oder Seilgetriebe. Ein definierter Schwenkwinkel der Schwimmerstange infolge der Hubbewegung des Schwimmers bedingt einen korrespondierenden Schwenkwinkel des ersten Rades. Übertragen wird die Schwenkbewegung des ersten Rades durch das Zugmittelgetriebe mit einem Übersetzungsverhältnis 1 auf das zweite Rad des Zugmittelgetriebes. Die beiden Räder werden somit jeweils um denselben Schwenkwinkel geschwenkt. Mit dem zweiten, unteren Rad, ist drehfest die Blende verbunden. Diese wird in Abhängigkeit vom Schwenkwinkel des zweiten Rades geschwenkt und blendet die Auslauföffnung des Flüssigkeitsbehälters mehr oder weniger ab, allerdings nicht vollständig. So ist selbst bei einem hohen Einstau von Flüssigkeit im Flüssigkeitsbehälter und somit einem relativ hohen Flüssigkeitsdruck im Bereich der Auslauföffnung sichergestellt, dass Flüssigkeit durch die Auslauföffnung austreten kann, allerdings bei über das unterschiedliche Flüssigkeitsniveau im Flüssigkeitsbehälter im Wesentlichen konstantem Massenstrom.

Nachteilig ist bei diesem Abflussmengenregler die nur sehr beschränkte Steuerung, die ausschließlich über die Kontur der Blende erfolgt. Ferner ist von Nachteil, dass durch die feste Schwenkachse des Schwimmers und des erforderlichen Schwenkbereichs des Schwimmers eine Anordnung des Abflussmengenreglers nur in solchen Bereichen des Flüssigkeitsbehälters möglich ist, in denen ausreichend Platz besteht. Schließlich befindet sich der Schwimmer in seiner vollständig abgesenkten Position recht nah zur Auslauföffnung des Flüssigkeitsbehälters. Auch in der EP 1 669 499 sowie der EP 1 672 132 A2 ist ein Abflussmengenregler der eingangs genannten Art beschrieben, wobei einer Auslauföffnung eines Flüssigkeitsbehälters eine geradlinig bewegbare Blende zugeordnet ist, die in Abhängigkeit vom Flüssigkeitsspiegel den Auslauf der Flüssigkeit aus dem Behälter regelt. Ein in Abhängigkeit vom Flüssigkeitsdruck positionsveränderliches Bauteil steuert die Blende über eine Kurve an und es erfolgt die Abblendbewegung der Blende gegen eine Rückstellkraft. Ein um eine Achse drehbares Steuerelement weist die Kurve auf. Diese Kurve dient dem Umsetzen der Drehbewegung des Steuerelements in die geradlinige Bewegung der Blende. Es ist eine in Abhängigkeit vom Flüssigkeitsdruck formveränderliche Einrichtung vorgesehen, die das in Abhängigkeit vom Flüssigkeitsdruck geradlinig verfahrbare Bauteil aufweist, das die Stellbewegung über Übertragungsmittel in eine Drehbewegung des Steuerelements umwandelt. Bei der in Abhängigkeit vom Flüssigkeitsdruck formveränderlichen Einrichtung handelt es sich um einen hydrostatischen Wandler. Die Kurve des Steuerelements erstreckt sich über einen Winkel von mindestens 360°, insbesondere über einen Winkel von 360° bis 460°. Das Übertragungsmittel ist als in sich geschlossener umgelenkter Seilzug ausgebildet. Mit einem Seilabschnitt des Seilzugs ist das Stellglied verbunden, und mit einer drehbaren Umlenkrolle für den Seilzug das Steuerelement verbunden.
Dieser Abflussmengenregler ist aufgrund seiner Gestaltung baulich sehr aufwendig und es ist der Regelungsbereich auf relativ geringe Einstaubereiche beschränkt. Hinzu kommt, dass die Verfahrstrecke des Stellglieds des hydrostatischen Wandlers nur relativ gering ist.
In der DE 20 2008 003 324 U1 ist ein Abflussmengenregler beschrieben, bei dem eine vor einer Abflussöffnung des Flüssigkeitsbehälters angeordnete vertikal verschieblich gelagerte Blende über ein Steuerelement mit einem Schwimmer kraftschlüssig verbunden ist. Der Schwimmer ist mit einem Führungselement fest verbunden, wobei das Führungselement auf einer Vertikalspindel berührungslos angeordnet ist. Zur Übertragung einer Drehbewegung auf die Vertikalspindel ist im Bereich des Führungselements eine Mutter drehbar gelagert angeordnet und es sind zwischen dem Führungselement und der Mutter Magnete zur Kraftübertragung zwischen beiden angeordnet. Am unteren Ende der Vertikalspindel ist ein Schneckenrad mit der Vertikalspindel im kraftschlüssigen Verbund angeordnet und das Schneckenrad mit einer Steuerscheibe kraftübertragend angeordnet. Die Steuerscheibe ist über ein, die Kreisbewegung der Steuerscheibe in eine lineare Vertikalbewegung der Blende umwandelndes Koppelelement mit der Blende verbunden.

Weitere Abflussmengenregler sind aus der DE 42 18 254 A1, der EP 0 108 378 A1 sowie der EP 0 396 129 A1 bekannt.

Aufgabe der vorliegenden Erfindung ist es, einen Abflussmengenregler der eingangs genannten Art so weiterzubilden, dass eine präzise Steuerung der Abblendung der Auslauföffnung durch die Blende bei universeller Anordnung des Schwimmers zum Ansteuern der Blende gewährleistet ist.

Gelöst wird die Aufgabe bei einem Abflussmengenregler der eingangs genannten Art dadurch, dass das Zugmittelgetriebe ein Übersetzungsverhältnis größer 1 aufweist sowie der Abflussmengenregler ein zweites Zugmittelgetriebe zum Übertragen der Bewegung des Schwimmers auf das erste Rad aufweist, wobei der Schwimmer fest mit dem Zugmittel des zweiten Zugmittelgetriebes verbunden ist.

Bei dem erfindungsgemäßen Abflussmengenregler sind somit zwei Zugmittelgetriebe vorgesehen. Das zweite Zugmittelgetriebe ermöglicht insbesondere die universelle Anordnung des Schwimmers zum Ansteuern der Blende. Über dieses zweite Zugmittelgetriebe kann nahezu von einem beliebigen Ort die Bewegung des Schwimmers auf das erste Zugmittelgetriebe übertragen werden.

Übersetzung ist das Verhältnis von Antriebsdrehzahl zu Abtriebsdrehzahl. - Das erste Zugmittelgetriebe dient insbesondere dem Zweck, ein optimales Übersetzungsverhältnis im Sinne einer Untersetzung herbeizuführen, sodass sich das zweite Rad des ersten Zugmittelgetriebes bei einem vorgegebenen Schwenkwinkel des ersten Rades dieses Zugmittelgetriebes um einen geringeren Schwenkwinkel dreht als das erste Rad, sodass eine präzise Steuerung der Abblendung durch die Blende erfolgen kann.

Diese Ausbildung des Abflussmengenreglers ermöglicht es, sehr große Einstauhöhen von Wasser im Flüssigkeitsbehälter, im Verhältniss zu kleinen Abflüssen, zu beherrschen, beispielsweise bei Hochwasserrückhaltebecken Einstauhöhen, die durchaus bis 15 Meter betragen können, oder Einstauhöhen bei kleinen Abflüssen in Sedimentationsbecken. Der sehr große Verfahrweg des Schwimmers entsprechend der Einstauhöhe kann unkompliziert über das zweite Zugmittelgetriebe bewerkstelligt und auf das erste Zugmittelgetriebe im Sinne des Übersetzungsverhältnisses größer 1, somit durch Untersetzung übertragen werden.

Es wird als vorteilhaft angesehen, wenn das zweite Zugmittelgetriebe ein Übersetzungsverhältnis von 1 aufweist. Entsprechend der durch die Bewegung des Schwimmers infolge der Änderung des Flüssigkeitsniveaus im Flüssigkeitsbehälter auf das Zugmittel des zweiten Zugmittelgetriebes aufgebrachten Bewegung, verfährt dieses Zugmittel und bewirkt mit diesem Übersetzungsverhältnis von 1 eine Ablaufbewegung des Zugmittels des zweiten Zugmittelgetriebes an einem dem ersten Rad des ersten Zugmittelgetriebes zugeordneten Rad mit einer Ablaufstrecke dort, die der Hubstrecke des Schwimmers entspricht. Dieses Rad des zweiten Zugmittelgetriebes läuft mit derselben Drehzahl um wie das erste Rad des ersten Zugmittelgetriebes. Von dort erfolgt die Übertragung der Bewegung des Schwimmers auf das zweite Rad des ersten Zugmittelgetriebes mit dem Übersetzungsverhältnis größer 1.

Baulich besonders einfach ist der Abflussmengenregler gestaltet, wenn der Schwimmer in einer Führung, insbesondere einer Schlittenführung verschieblich gelagert ist. Diese Führung gibt somit den Verfahrweg des Schwimmers beim Heben und Senken in Abhängigkeit vom Einstauniveau der Flüssigkeit im Flüssigkeitsbehälter vor. Hierbei kann die Führung unterschiedlich angeordnet sein, insbesondere, um unterschiedlichen Einbaubedingungen des Schwimmers im Flüssigkeitsbehälter Rechnung zu tragen. Gemäß einer bevorzugten Alternative ist vorgesehen, dass der Schwimmer in der Führung ausschließlich vertikal verschieblich gelagert ist. Diese Variante findet insbesondere dann Anwendung, wenn der Flüssigkeitsbehälter derart beschaffen ist, dass die Führung ausschließlich vertikal im Flüssigkeitsbehälter positioniert werden kann. Es ist gemäß einer alternativen Gestaltung vorgesehen, dass in einem ersten Hubbereich des Schwimmers die Führung ausschließlich vertikal angeordnet ist und in einem zu diesem Abschnitt der Führung benachbarten Bereich der Führung dieser schräg angeordnet ist, somit sich vertikal und horizontal erstreckt. Im letztgenannten Fall ist der Schwimmer im ersten Hubbereich ausschließlich vertikal verschieblich gelagert und im zweiten Hubbereich vertikal und horizontal überlagert verschieblich gelagert. Diese letztgenannte Gestaltung ermöglicht es, eine Hubhöhe des Schwimmers in einem Flüssigkeitsbehälter zu realisieren, der zueinander horizontal versetzte Behälterbereiche aufweist, insbesondere einen oberen Bereich aufweist, der sich zur Seite hin verjüngt.

Bezüglich des zweiten Zugmittelgetriebes wird es als besonders vorteilhaft angesehen, wenn dieses mindestens zwei Abschnitte des mittels Rädern umgelenkten Zugmittels aufweist, wobei einer der Abschnitte horizontal angeordnet ist, zur Schaffung eines horizontalen Abstands von Schwimmerbereich und dem Bereich der Blende und des ersten Zugmittelgetriebes. Durch diese Ausbildung des zweiten Zugmittelgetriebes kann der horizontal angeordnete Abschnitt einen großen Abstand zwischen Schwimmerbereich, insbesondere der Führung des Schwimmers, und dem Bereich der Blende und des ersten Zugmittelgetriebes überbrücken. Dies ermöglicht es, den Schwimmer relativ weit entfernt zur Blende anzuordnen. Der Schwimmer ist demnach nicht vor dem Auslauf angeordnet, zum Beispiel bei Trockenwetter.

Diese Gestaltung mit dem horizontalen Abschnitt des zweiten Zugmittelgetriebes ermöglicht es, den Abflussmengenregler in zwei unterschiedlichen Behälterbereichen des Flüssigkeitsbehälters anzuordnen. Befindet sich beispielsweise der Schwimmer in einem Bauwerksbereich des Flüssigkeitsbehälters und die Blende mit dem ersten Zugmittelgetriebe in einem anderen Bauwerksbereich des Flüssigkeitsbehälters, die miteinander verbunden sind, kann die Bewegung des Schwimmers beispielsweise durch eine Öffnung in einer Zwischenwand des Behälters zum ersten Zugmittelgetriebe übertragen werden. Insbesondere unter dem Aspekt der Durchführung des horizontalen Abschnitts des zweiten Zugmittelgetriebes durch eine solche Öffnung einer Wand wird es als vorteilhaft angesehen, wenn der horizontale Abschnitt ein Rohr durchsetzt. Dieses Rohr schützt das Zugmittel und ist insbesondere in die Öffnung der Zwischenwand eingepasst.

Eine besonders einfache Gestaltung, bei geringem erforderlichen Bauraum, weist das zweite Zugmittelgetriebe auf, wenn dessen Zugmittel in einem horizontal verlaufenden Bereich und/oder in einem vertikal verlaufenden Bereich und/oder in einem schräg verlaufenden Bereich, ausgenommen die Bereiche der Räder dieses Zugmittelgetriebes, parallel verlaufende Zugmittelabschnitte aufweist.

Es wird als besonders vorteilhaft angesehen, wenn das erste Zugmittelgetriebe und/oder das zweite Zugmittelgetriebe als Kettengetriebe ausgebildet ist/sind. Ein Kettengetriebe ist äußerst robust, insbesondere unter dem Aspekt der Kraft- bzw. Momentübertragung zwischen der jeweiligen Kette und den zugeordneten Zahnrädern des Kettengetriebes. Ein solches Kettengetriebe ist auch besonders funktionssicher bei Verschmutzungen in dessen Bereich durch die im Flüssigkeitsbehälter befindlichen Stoffe bzw. Gegenstände, die insbesondere in Abwässern mitgeführt werden. Grundsätzlich kann das jeweilige Zugmittelgetriebe auch anders gestaltet werden, beispielsweise als Riemengetriebe.

Baulich ist der Abflussmengenregler im Bereich der Übertragung der Bewegungen zwischen den beiden Zugmittelgetrieben besonders einfach ausgebildet, wenn ein Rad des zweiten Zugmittelgetriebes und das erste Rad des ersten Zugmittelgetriebes dieselbe Drehachse aufweisen und drehfest miteinander verbunden sind.

Es wird als besonders vorteilhaft angesehen, wenn das erste Zugmittelgetriebe ein Übersetzungsverhältnis von 1,5 bis 3,5, vorzugsweise von 2 bis 3, insbesondere von 2,5 aufweist.

Grundsätzlich ist bei dem Abflussmengenregler vorgesehen, dass die Achsen der Räder von erstem Zugmittelgetriebe und/oder zweitem Zugmittelgetriebe ortsfest sind.

Gemäß einer bevorzugten Weiterbildung des erfindungsgemäßen Abflussreglers ist vorgesehen, dass mit dem zweiten Rad des ersten Zugmittelgetriebes ein Stellelement verbunden ist, wobei das Stellelement eine Steuerkurve aufweist und über ein Übertragungsmittel eine Schwenkbewegung der Steuerkurve in eine Hubbewegung der Blende umgesetzt wird. Insbesondere erstreckt sich die Steuerkurve, bezogen auf eine Steuerelementdrehachse über einen Winkel von mindestens 360°. Bei dem Steuerelement handelt es sich insbesondere um eine Steuerscheibe.

Vorzugsweise ist das Übertragungsmittel eine Blendenaufhängung. Diese Blendenaufhängung greift im Bereich eines oberen Endes in die Steuerkurve ein und ist im Bereich eines unteren Endes mit der Blende verbunden. Gemäß einer vorteilhaften Weiterbildung ist vorgesehen, dass die Blendenaufhängung einen Stangenabschnitt mit Längsschlitz zur Aufnahme einer Führungsachse, die konzentrisch zur Achse des zweiten Rades des ersten Zugmittelgetriebes angeordnet ist, aufweist. Dies ermöglicht insbesondere eine vertikale Führung des Stangenabschnitts und damit der Blende bei Relativbewegung des oberen Endes des Stangenabschnitts bezüglich des Steuerelements bzw. der Steuerscheibe.

Die Blende ist insbesondere als rechteckig ausgebildete Platte gestaltet. Die Blende dient insbesondere dem Abblenden einer kreisförmig gestalteten Auslauföffnung des Flüssigkeitsbehälters.

Gemäß einer weiteren bevorzugten Weiterbildung des erfindungsgemäßen Abflußreglers ist vorgesehen, dass die Blende unmittelbar mit dem zweiten Rad des ersten Zugmittelgetriebes verbunden ist. Es ist demnach bei dieser Gestaltung kein Steuerelement mit Steuerkurve und kein Übertragungsmittel vorgesehen. Vielmehr sind wegen der identischen Schwenkachsen von zweitem Rad und Blende deren Schwenkbewegungen und damit Schwenkwinkel identisch. Die Blende ist insbesondere als plattenförmiger Körper ausgebildet, der eine Steuerkante zum veränderlichen Abblenden des Auslaufs des Behälters, entsprechend der Schwenkstellung der Blende, aufweist.

Da der Schwimmer, aufgrund der Lagerung im zweiten Zugmittelgetriebe, zusammen mit diesem unabhängig vom ersten Zugmittelgetriebe und der Blende platziert werden kann, besteht die Möglichkeit, eine Anordnung bei dem Abflussmengenregler zu verwirklichen, bei der sich der Schwimmer in seiner vollständig abgesenkten Stellung mit seiner unteren Begrenzung auf einem tieferen Niveau, bezogen auf eine Vertikale, befindet als die untere Begrenzung der Blende und/oder die untere Begrenzung einer Auslauföffnung des Flüssigkeitsbehältnisses. Demzufolge kann bereits bei einem äußerst niedrigen Flüssigkeitsniveau im Flüssigkeitsbehälter, insbesondere bereits dann, wenn sich in einem gegenüber dem Blendenbereich vertieften Bereich des Flüssigkeitsbehälters Flüssigkeit sammelt, bereits der Regelvorgang über den Schwimmer eingeleitet werden.

Die Erfindung einschließlich deren Weiterbildungen schlägt somit einen Abflussmengenregler vor, bei dem die Bewegung des Schwimmers untersetzt auf die Blende übertragen wird, wobei der Antrieb des Abflussmengenreglers, somit der Schwimmer, räumlich entkoppelt von der Steuerung der Blende und deren unmittelbaren Antrieb ist. Es können die unterschiedlichsten Stauhöhen verwirklicht werden. Die Untersetzung ermöglicht, unabhängig von der jeweils zu beherrschenden maximalen Einstauhöhe der Flüssigkeit im Flüssigkeitsbehälter, das Steuerelement relativ klein auszubilden, insbesondere mit einer Steuerkurve deren Abstand zur Drehachse des Steuerelement relativ gering ist. Bei Verwendung der Übertra-Blende, bezogen auf die Einstauhöhe der Flüssigkeit im Behälter, oberhalb des maximalen Flüssigkeitsniveaus platziert werden, oder aber auch deutlich weiter unten, somit bei Überdeckung durch die eingestaute Flüssigkeit.
Als besonders vorteilhaft wird es angesehen, wenn das Steuerelement, insbesondere die Steuerscheibe, bzw. die Blende vom zweiten Rad des ersten Zugmittelgetriebes lösbar ist und in unterschiedlichen Positionen mit dem zweiten Rad des ersten Zugmittelgetriebes verbindbar ist. Dies ermöglicht es, das Steuerelement bzw. die Blende in unterschiedlichen Positionen relativ zu diesem Rad zu positionieren, mit der Konsequenz eines veränderten Abblendverhaltens des Steuerelements. Weitere Merkmale der Erfindung sind in der Beschreibung der Zeichnung der Figuren, den Figuren und in den Unteransprüchen dargestellt. In der Zeichnung ist die Erfindung anhand mehrerer Ausführungsformen beispielsweise dargestellt, ohne auf diese Ausführungsformen beschränkt zu sein.
Es zeigt in vereinfachter, schematischer Darstellung:
- Fig. 1: ein erstes Ausführungsbeispiel des Abflussmengenreglers, gesehen in einer Stirnansicht,
- Fig. 2: den in Fig. 1 veranschaulichten Abflussmengenregler in einer räumlichen Darstellung,
- Fig. 3: ein Detail des Abflussmengenreglers gemäß der Fig. 1 und 2,
- Fig. 4: die Darstellung einer Anordnung des Abflussmengenreglers in einem Flüssigkeitsbehälter, bei besonderer Ausbildung des Flüssigkeitsbehälters mit Trennwand zwischen Antrieb und Steuerung des Abflussmengenreglers,
- Fig. 5: ein zweites Ausführungsbeispiel des Abflussmengenreglers, gezeigt in einer Stirnansicht,
- Fig. 6: ein drittes Ausführungsbeispiel des Abflussmengenreglers, für den unteren Bereich des Abflussmengenreglers veranschaulicht, gezeigt in einer Stirnansicht,
- Fig. 7: ein viertes Ausführungsbeispiel des Abflussmengenreglers, gezeigt in einer Stirnansicht,
- Fig. 8: ein fünftes Ausführungsbeispiel des Abflussmengenreglers, gezeigt in einer Stirnansicht.

### Figurenbeschreibung

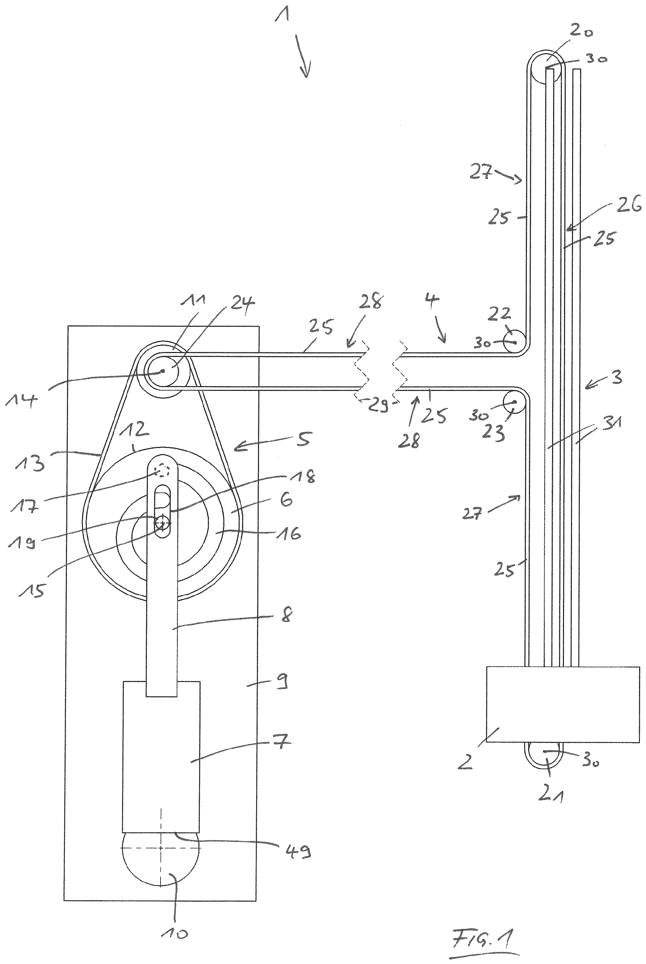

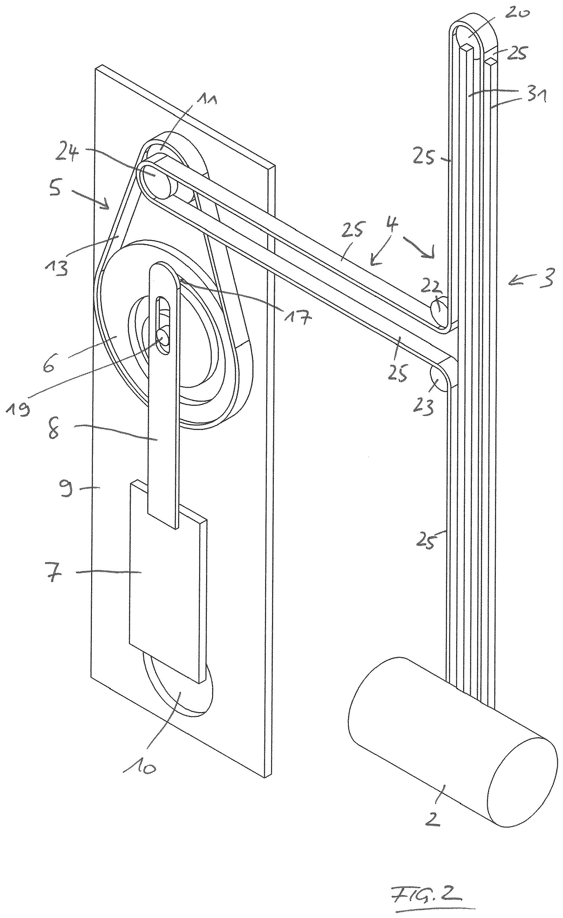

Es wird zunächst auf die Darstellung der Fig. 1 bis 3 Bezug genommen. Veranschaulicht ist ein Abflussmengenregler 1 zur Regelung des Auslaufs eines Flüssigkeitsbehälters, dahingehend, dass unabhängig von der Einstauhöhe der Flüssigkeit im Flüssigkeitsbehälter ein im Wesentlichen konstanter Flüssigkeitsvolumenstrom durch den Auslauf abfließt.

Bei dem Flüssigkeitsbehälter handelt es sich insbesondere um ein Becken, beispielsweise um ein Regenrückhaltebecken, ein Hochwasserbecken, eine Zisterne, ein Abscheidebecken. - Dies gilt auch für die sonstigen Ausführungsbeispiele.

Der Abflussmengenregler 1 weist im Wesentlichen einen Schwimmer 2, eine Führung 3 für den Schwimmer 2, ein mit dem Schwimmer 2 verbundenes Zugmittelgetriebe 4, ein mit diesem zusammenwirkendes Zugmittelgetriebe 5, ein als Steuerscheibe 6 ausgebildetes Steuerelement, eine Blende 7 und eine Blendenaufhängung 8 auf.

Eine rechteckförmig und hochkant angeordnete Lagerplatte 9 ist unten mit einer kreisförmigen Öffnung 10 versehen. Die Lagerplatte 9 ist über nicht veranschaulichte Befestigungsmittel mit einer Wand eines Flüssigkeitsbehälters verschraubt, wobei die Öffnung 10 in der Lagerplatte 9 mit einer Auslauföffnung in der Wand fluchtet. Am umlaufenden Außenrand ist die Lagerplatte 9 zur Wand des Flüssigkeitsbehälters abgedichtet, sodass im Flüssigkeitsbehälter befindliche Flüssigkeit, insbesondere Abwasser bei Ausbildung des Flüssigkeitsbehälters als Regenrückhaltebecken, nur durch die Öffnung 10 hindurch durch die Auslauföffnung in der Wand abfließen kann. Die Lagerplatte 9 ist vertikal angeordnet. In der Lagerplatte 9 ist das Zugmittelgetriebe 5 gelagert. Dieses Zugmittelgetriebe 5 ist als Kettengetriebe ausgebildet. Das Zugmittelgetriebe 5 ist durch ein oberes Zahnrad 11, ein unteres Zahnrad 12 sowie eine die beiden Zahnräder 11,12 umschlingende Kette 13 ausgebildet. Die beiden Zahnräder 11,12 sind in einer vertikalen Flucht übereinander angeordnet und um parallele, horizontale Achsen 14, 15 drehbar. Der Durchmesser des oberen Zahnrades 11 ist deutlich geringer als der Durchmesser des unteren Zahnrades 12. Hierdurch ergibt sich bei dem Zugmittelgetriebe 5 bzw. Kettengetriebe ein Übersetzungsverhältnis größer 1, im Ausführungsbeispiel ein solches von ungefähr 2,5. Bei einem großen Schwenkwinkel des oberen Zahnrads 11 ergibt sich somit ein deutlich geringerer Schwenkwinkel des unteren Zahnrads 12.

Mit dem unteren Zahnrad 12 ist die Steuerscheibe 6 verbunden, die kreisförmig ist und gleichfalls um die Achse 15 drehbar ist. Die Steuerscheibe 6 weist eine spiralförmige Steuerkurve 16 auf, die sich im Ausführungsbeispiel über einen Winkel von 360° erstreckt. Im Bereich des oberen Endes ist die Blendenaufhängung 8 mit einem sich parallel zu den Achsen 14, 15 erstreckenden Zapfen 17 versehen, dessen Durchmesser geringfügig geringer ist als die Breite der Steuerkurve 16. Somit ist der Zapfen 17 in der Steuerkurve 16 der Steuerscheibe 6 geführt. Unterhalb des Zapfens 17 weist ein Stangenabschnitt der Blendenaufhängung 8 einen Längsschlitz 18 zur Aufnahme einer Führungsachse 19 auf, die konzentrisch zur Achse 15 angeordnet ist. Bei einer Schwenkbewegung der Steuerscheibe 6 durch Antrieb des Zugmittelgetriebes 5 wird somit über die Steuerkurve 16 die Blendenaufhängung 8 vertikal nach oben oder unten bewegt und hierbei über die Führungsachse 19 geführt. Entsprechend der Hub- bzw. Senkbewegung der Blendenaufhängung 8 und damit der Blende 7, wird die Öffnung 10 mehr oder weniger abgeblendet, wobei in vollständig abgesenkter Stellung der Blende 7 ein Restquerschnitt der Öffnung 10 offen bleibt. Die Blende 7 ist als rechteckiger, plattenförmiger Körper ausgebildet, der vertikal aufgehängt ist, mit unterer horizontal angeordneter Schmalseite, die eine Steuerkante 49 zum Abblenden der Öffnung 10 bildet. Angetrieben wird das Zugmittelgetriebe 5, konkret das obere Zahnrad 11 des Zugmittelgetriebes 5, durch das Zugmittelgetriebe 4.

Das Zugmittelgetriebe 4 ist gleichfalls als Kettengetriebe ausgebildet. Es weist ein oberes Zahnrad 20, ein unteres Zahnrad 21, auf etwa halber Höhe zwischen den beiden Zahnrädern 20, 21 Umlenkzahnräder 22, 23 sowie in Abstand zu diesen Zahnrädern 22, 23 ein Zahnrad 24 auf. Das Zahnrad 24 ist um die Achse 14 des oberen Zahnrads 11 des Zugmittelgetriebes 4 drehbar und mit dem Zahnrad 11 fest verbunden. Die Zahnräder 11 und 24 drehen sich somit mit derselben Winkelgeschwindigkeit. Eine Kette 25 des Zugmittelgetriebes 4 weist somit einen vertikal angeordneten langen Abschnitt 26 zwischen den Zahnrädern 20 und 21, ferner parallel zum langen Abschnitt 26 zwei kürzere Abschnitte 27 zwischen den Zahnrädern 20 und 22 bzw. 21 und 23 auf, des Weiteren horizontale Abschnitte zwischen den Zahnrädern 22, 24 bzw. 23, 24. Die strichlierten Linien 29 verdeutlichen, dass die horizontalen Abschnitte 28 eine beliebige horizontale Erstreckung aufweisen können, je nach den Anforderungen hinsichtlich der Platzierung von Schwimmer 2 und Blende 7.

Die Zahnräder 20 bis 24 sind um horizontale Achsen 30, somit Achsen, die parallel zu den Achsen 14, 15 sind, schwenkbar. Beidseitig des langen Abschnitts 26 des Zugmittelgetriebes 4 sind Führungsschienen 31 der Führung 3 angeordnet. In diesen vertikal angeordneten Führungsschienen 31 ist der Schwimmer 2 vertikal verschieblich, wobei der Schwimmer 2 fest mit der Kette 25 im Bereich des Abschnitts 26 verbunden ist. Nicht dargestellt ist die konkrete Lagerung des Schwimmers 2 in den Führungsschienen 31, die insbesondere über einen Führungsschlitten erfolgt.

Eine Hub- bzw. Senkbewegung des Schwimmers 2 in Abhängigkeit vom Einstauniveau der Flüssigkeit im Flüssigkeitsbehälter wird somit im Übersetzungsverhältnis 1 auf die Drehung des Zahnrads 24 übertragen, womit eine geradlinige Hubstrecke des Schwimmers 2 der Umfangslaufstrecke der Kette 25 im Bereich des Zahnrads 24 entspricht. Diese Drehbewegung des Zahnrads 24 wird aufgrund der Verbindung dieses Zahnrads 24 mit dem Zahnrad 11 übertragen, womit sich beide Zahnräder 11, 24 mit derselben Winkelgeschwindigkeit drehen und es wird über das Zahnrad 11 die Kette 13 und damit das Zahnrad 12 angetrieben. Mit dem Zahnrad 12 wird die Steuerscheibe 6 geschwenkt und über deren Steuerkurve 16 die Blende 7 angehoben bzw. abgesenkt, je nachdem, ob das Flüssigkeitsniveau im Flüssigkeitsbehälter fällt oder steigt.

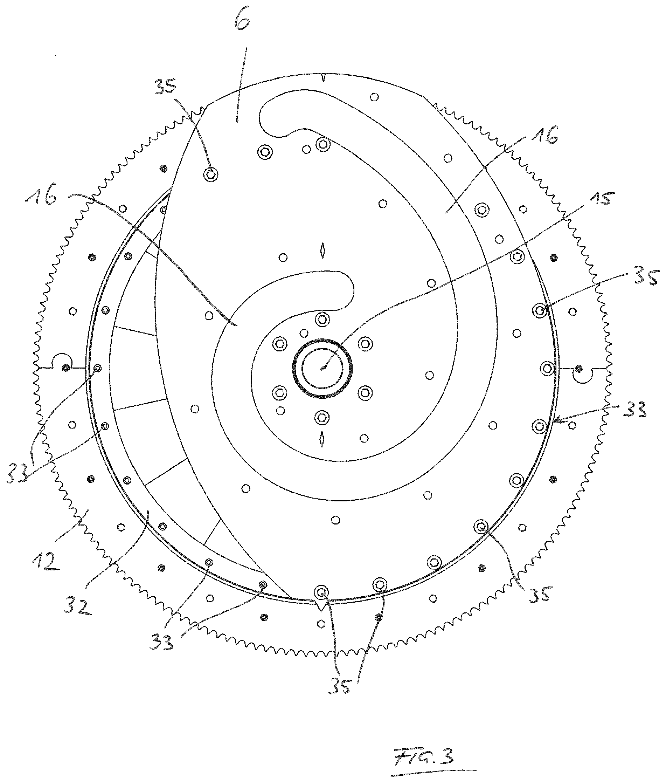

Fig. 3 verdeutlicht im Detail die Ausbildung des unteren Zahnrads 12 und der mit diesem verbundenen Steuerscheibe 6. Gezeigt ist, dass das Zahnrad 12 bzw. ein mit diesem verbundener Ring 32 konzentrisch zur Achse 15 mit einer Vielzahl von Bohrungen 33 versehen ist. Diese Vielzahl von Bohrungen 33 ermöglicht es, die Steuerscheibe 6 in unterschiedlichen Drehpositionen zur Achse 15 bezüglich des Ringes 32 und damit des Zahnrads 12 zu positionieren und in der jeweiligen gewünschten Position mit dem Ring 32 zu verbinden. Der jeweiligen Position ist eine definierte Abflusscharakteristik des Abflussmengenreglers zugeordnet. Die Verbindung der Steuerscheibe 6 mit dem Ring 32 erfolgt mittels Schrauben 34, die den Schrauben 34 zugeordnete Bohrungen 33 im Ring 32 durchsetzen und mit nicht gezeigten Muttern verschraubt sind.

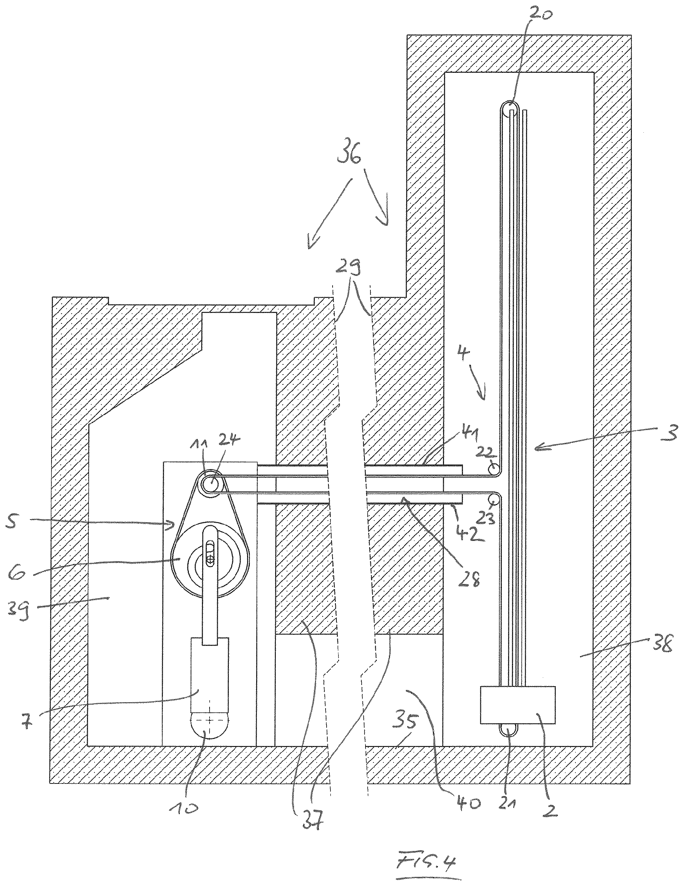

Fig. 4 zeigt ein gegenüber dem ersten Ausführungsbeispiel nach den Fig. 1 bis 3 modifiziertes Ausführungsbeispiel. Die Änderung bezieht sich darauf, dass die Führung 3 für den Schwimmer 2 bis nahezu zum Boden 35 eines Flüssigkeitsbehälters 36 verlängert ist und der Flüssigkeitsbehälter 36 durch eine Trennwand 37 oder einen deutlich breiteren Trennbereich in zwei Teilräume 38, 39 getrennt ist, die im Bereich des Bodens 35 mittels eines Durchlasses 40 kommunizierend miteinander verbunden sind. Dem einen Behälterbereich 38 ist der Antrieb, somit der Schwimmer 2 und die Führung 3 zugeordnet, während dem anderen Behälterbereich 39 die Blende 7 und das Zugmittelgetriebe 5 zugeordnet. Die Linien 29 verdeutlichen wiederum, dass infolge der jeweils vorgesehenen horizontalen Ausdehnung der Trennwand 37 der horizontale Abschnitt 28 des Zugmittelgetriebes 4 eine angepasste Länge aufweist. Dieser horizontale Abschnitt 28 durchsetzt ein in das Durchgangsloch 41 der Trennwand 37 eingepasstes Rohr 42, womit dieses Rohr 42 dem Schutz des Zugmittelgetriebes 4 im Bereich des horizontalen Abschnitts 28 dient.

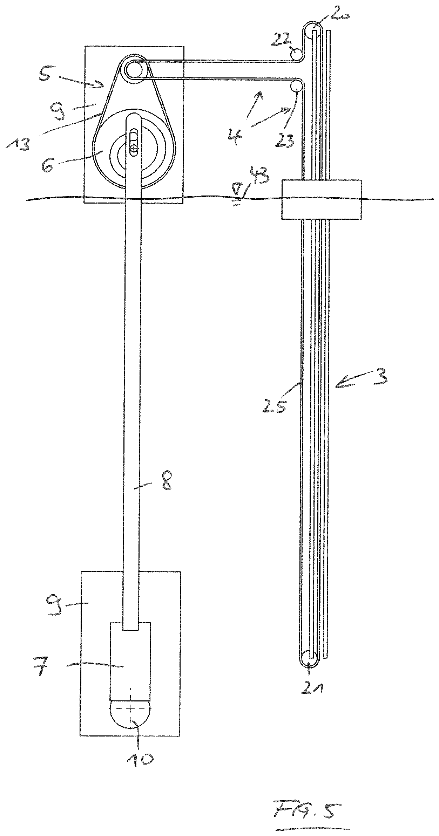

Fig. 5 verdeutlicht für eine modifizierte Ausführungsform, dass, durch Verlängerung der Blendenaufhängung 8, das Zugmittelgetriebe 5 mit Steuerscheibe 6 so weit oben im Flüssigkeitsbehälter angebracht werden kann, dass diese Teile sich oberhalb des maximalen Einstauniveaus 43 im Flüssigkeitsbehälter befinden.

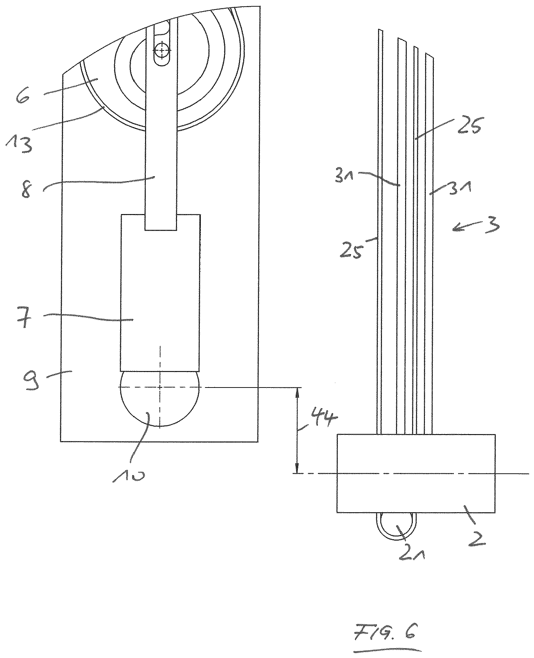

Die Ausführungsform nach Fig. 6 veranschaulicht, dass die Führung 3 so weit nach unten verlängert sein kann, dass sich der Schwimmer 2 in der veranschaulichten vollständig abgesenkten Stellung mit seiner unteren Begrenzung auf einem tieferen Niveau, bezogen auf eine Vertikale, befindet, als die untere Begrenzung der Öffnung 10 in der Lagerplatte 9, somit die untere Begrenzung der Auslauföffnung aus dem Flüssigkeitsbehälter. Der Doppelpfeil 44 verdeutlicht, dass bereits bei diesem Differenzniveau von Schwimmer 2 zu Öffnung 10 eine effektive Regelung des Abflussreglers 1 mittels des Schwimmers 2 erfolgen kann. Die Führung 3 mit dem Schwimmer 2 kann beispielsweise in eine Vertiefung im Boden 35 verlängert sein, sodass dort sich früher Wasser sammelt als im verbleibenden Bodenbereich des Flüssigkeitsbehälters.

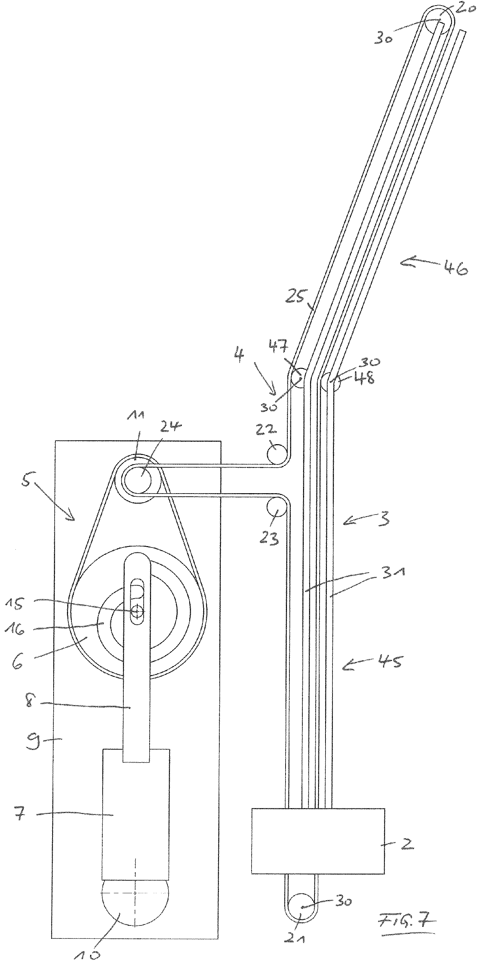

Das Ausführungsbeispiel nach Fig. 7 veranschaulicht, dass die Führung 3 nicht geradlinig, konkret vertikal angeordnet sein muss. Stattdessen ist ein unterer vertikaler Führungsabschnitt 45 und ein sich daran oben anschließender schräg angeordneter Führungsabschnitt 46 vorgesehen. Zusätzlich sind zum Umlenken der Kette 25 weitere Zahnräder 47, 48 vorgesehen. Demnach ist der Schwimmer 2 in der Führung 3 in dem Führungsabschnitt 45 ausschließlich vertikal verschieblich gelagert und in den Führungsabschnitt 46 vertikal und horizontal überlagert verschieblich gelagert. Diese Gestaltung ist dann von Vorteil, wenn der Flüssigkeitsbehälter 36 derart gestaltet ist, dass die Führung 3 nicht über die gesamte Hubhöhe des Schwimmers vertikal angeordnet werden kann.

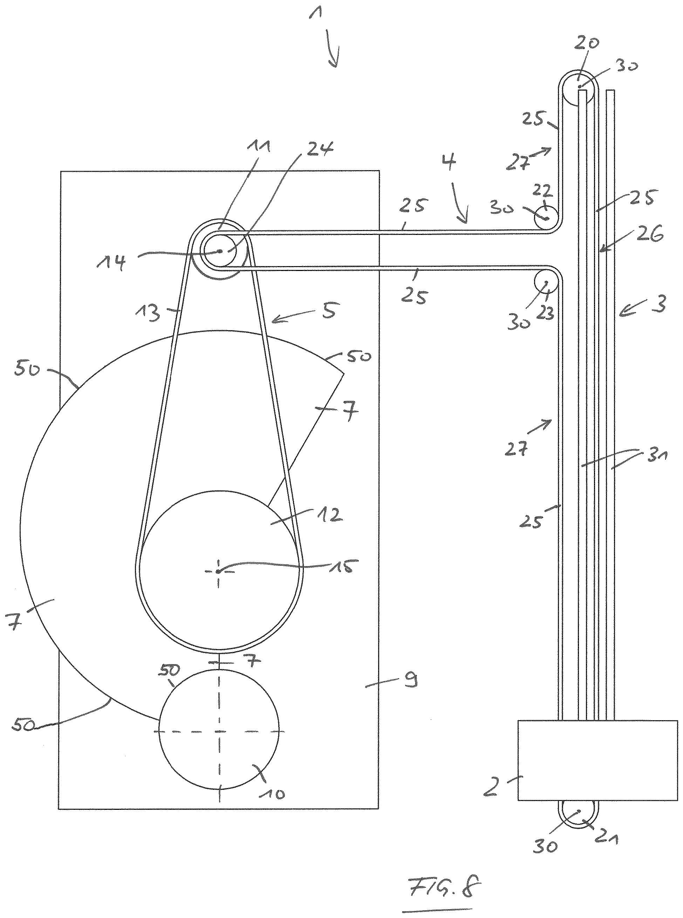

Bei dem Ausführungsbeispiel nach Fig.8 ist die Blende 7 unmittelbar mit dem zweiten Rad 12 verbunden. Wegen der identischen Schwenkachse - Achse 15 - von Rad 12 und Blende 7 ist deren Schwenkwinkel, bei Antrieb über den Schwimmer 2, identisch. Die Blende 7 ist als plattenförmiger Körper ausgebildet, der vertikal angeordnet mit dem Rad 12 verbunden ist, wobei die Steuerkante 50 der Blende 7 eine Blendensteuerkurve bildet. Die Steuerkante 50 dient dem veränderlichen Abblenden des Auslaufs des Flüssigkeitsbehälters 36 entsprechend der Schwenkstellug der Blende 7.

### Bezugszeichenliste

- 1: Abflussmengenregler
- 2: Schwimmer
- 3: Führung
- 4: Zugmittelgetriebe
- 5: Zugmittelgetriebe
- 6: Steuerscheibe
- 7: Blende
- 8: Blendenaufhängung
- 9: Lagerplatte
- 10: Öffnung
- 11: Zahnrad
- 12: Zahnrad
- 13: Kette
- 14: Achse
- 15: Achse
- 16: Steuerkurve
- 17: Zapfen
- 18: Längsschlitz
- 19: Führungsachse
- 20: Zahnrad
- 21: Zahnrad
- 22: Zahnrad
- 23: Zahnrad
- 24: Zahnrad
- 25: Kette
- 26: Abschnitt
- 27: Abschnitt
- 28: Abschnitt
- 29: Linie
- 30: Achse
- 31: Führungsteil
- 32: Ring
- 33: Bohrung
- 34: Schraube
- 35: Boden
- 36: Flüssigkeitsbehälter
- 37: Trennwand
- 38: Behälterbereich
- 39: Behälterbereich
- 40: Durchlass
- 41: Durchgangsloch
- 42: Rohr
- 43: Niveau
- 44: Doppelpfeil
- 45: Führungsabschnitt
- 46: Führungsabschnitt
- 47: Zahnrad
- 48: Zahnrad
- 49: Steuerkante
- 50: Steuerkante

## Patentansprüche

1. Abflussmengenregler (1) für einen Auslauf eines Flüssigkeitsbehälters (36), insbesondere für den Auslauf eines Beckens, mit einem Schwimmer (2), einem ersten Zugmittelgetriebe (5) und einer Blende (7), wobei das erste Zugmittelgetriebe (5) ein Zugmittel (13) und zwei mit diesem zusammenwirkende Räder (11, 12) aufweist, wobei das eine erste Rad (11) mittels des Schwimmers (2) antreibbar ist und die Blende (7) mittels des anderen zweiten Rads (12) antreibbar ist, **dadurch gekennzeichnet, dass** das erste Zugmittelgetriebe (5) ein Übersetzungsverhältnis größer 1 aufweist, sowie der Abflussmengenregler (1) ein zweites Zugmittelgetriebe (4) zum Übertragen der Bewegung des Schwimmers (2) auf das erste Rad (11) aufweist, wobei der Schwimmer (2) fest mit einem Zugmittel (25) des zweiten Zugmittelgetriebes (4) verbunden ist.

2. Abflussmengenregler nach Anspruch 1, **dadurch gekennzeichnet, dass** das zweite Zugmittelgetriebe (4) ein Übersetzungsverhältnis von 1 aufweist.

3. Abflussmengenregler nach Anspruch 1 oder 2, **dadurch gekennzeichnet, dass** der Schwimmer (2) in einer Führung (3), insbesondere einer Schlittenführung verschieblich gelagert ist.

4. Abflussmengenregler nach Anspruch 3, **dadurch gekennzeichnet, dass** der Schwimmer (2) in der Führung (3) ausschließlich vertikal verschieblich gelagert ist oder in einem ersten Hubbereich (45) ausschließlich vertikal verschieblich gelagert ist und in einem zweiten Hubbereich (46) vertikal und horizontal überlagert verschieblich gelagert ist.

5. Abflussmengenregler nach einem der Ansprüche 1 bis 4, **dadurch gekennzeichnet, dass** das zweite Zugmittelgetriebe (4) mindestens zwei Abschnitte (26, 27; 28) des mittels Rädern (20, 21, 22, 23, 24, 47, 48) umgelenkten Zugmittels (25) aufweist, wobei ein Abschnitt (28) der Abschnitte (26, 27; 28) horizontal angeordnet ist, zur Schaffung eines horizontalen Abstands vom Bereich des Schwimmers (2) zu dem Bereich der Blende (7) und des ersten Zugmittelgetriebes (4).

6. Abflussmengenregler nach Anspruch 5, **dadurch gekennzeichnet, dass** der horizontale Abschnitt (28) ein Rohr (42) durchsetzt.

7. Abflussmengenregler nach einem der Ansprüche 1 bis 6, **dadurch gekennzeichnet, dass** das Zugmittel (25) des zweiten Zugmittelgetriebes (4) in einem horizontal verlaufenden Bereich (28) und/oder in einem vertikal verlaufenden Bereich (26, 27) und/oder in einem schräg verlaufenden Bereich (46), ausgenommen den Bereich der Räder (20, 21, 22, 23, 24, 47, 48) dieses Zugmittelgetriebes (4), parallel verlaufende Zugmittelabschnitte (26, 27; 28, 28) aufweist.

8. Abflussmengenregler nach einem der Ansprüche 1 bis 7, **dadurch gekennzeichnet, dass** das erste Zugmittelgetriebe (5) und/oder das zweite Zugmittelgetriebe (4) als Kettengetriebe ausgebildet ist/sind.

9. Abflussmengenregler nach einem der Ansprüche 1 bis 8, **dadurch gekennzeichnet, dass** ein Rad (24) des zweiten Zugmittelgetriebes (4) und das erste Rad (11) des ersten Zugmittelgetriebes (5) dieselbe Drehachse (14) aufweisen und drehfest miteinander verbunden sind.

10. Abflussmengenregler nach einem der Ansprüche 1 bis 9, **dadurch gekennzeichnet, dass** das erste Zugmittelgetriebe (5) ein Übersetzungsverhältnis von 1,5 bis 3,5, vorzugsweise von 2 bis 3, insbesondere von 2,5 aufweist.

11. Abflussmengenregler nach einem der Ansprüche 1 bis 10, **dadurch gekennzeichnet, dass** die Achsen (14, 15) der Räder (11, 12) des ersten Zugmittelgetriebes (5) und/oder die Achsen (14, 30) der Räder (20, 21, 22, 23, 24, 47, 48) des zweiten Zugmittelgetriebes (4) ortsfest sind.

12. Abflussmengenregler nach einem der Ansprüche 1 bis 11, **dadurch gekennzeichnet, dass** mit dem zweiten Rad (12) des ersten Zugmittelgetriebes (5) ein Steuerelement (6) verbunden ist, wobei das Steuerelement (6) eine Steuerkurve (16) aufweist, und über ein Übertragungsmittel (8, 17) eine Schwenkbewegung der Steuerkurve (16) in eine Hubbewegung der Blende (7) umgesetzt wird, insbesondere die Steuerkurve (16), bezogen auf eine Drehachse (15) der Steuerscheibe (6), sich über einen Winkel von mindestens 360° erstreckt.

13. Abflussmengenregler nach einem der Ansprüche 1 bis 11, **dadurch gekennzeichnet, dass** die Blende (7) unmittelbar mit dem zweiten Rad (12) verbunden ist, wobei die Schwenkwinkel von Blende (7) und zweitem Rad (12) bei Antrieb durch den Schwimmer (2) identisch sind, und die Blende (7) eine Steuerkante (50) zum veränderlichen Abblenden des Auslaufs entsprechend der Schwenkstellung der Blende (7) aufweist.

14. Abflussmengenregler nach einem der Ansprüche 1 bis 13, **dadurch gekennzeichnet, dass** das Steuerelement (6) oder die Blende (7) vom zweiten Rad (12) lösbar und in unterschiedlichen Positionen mit dem zweiten Rad (12) verbindbar ist.

15. Abflussmengenregler nach einem der Ansprüche 1 bis 14, **dadurch gekennzeichnet, dass** sich der Schwimmer (2) in seiner vollständig abgesenkten Stellung mit seiner unteren Begrenzung auf einem tieferen Niveau, bezogen auf eine Vertikale, befindet, als die untere Begrenzung der Blende (7) und/oder die untere Begrenzung einer Auslauföffnung (10) des Flüssigkeitsbehälters (36).

## Claims

1. Flow rate regulator (1) for an outlet of a liquid container (36), in particular for the outlet of a basin, having a float (2), a first traction drive (5) and a screen (7), wherein the first traction drive (5) has a traction means (13) and two wheels (11, 12) that interact therewith, wherein the one, first wheel (11) is able to be driven by means of the float (2) and the screen (7) is able to be driven by the other, second wheel (12), **characterized in that** the first traction drive (5) has a transmission ratio of greater than 1, and the flow rate regulator (1) has a second traction drive (4) for transmitting the movement of the float (2) to the first wheel (11), wherein the float (2) is fixedly connected to a traction means (25) of the second traction drive (4).

2. Flow rate regulator according to Claim 1, **characterized in that** the second traction drive (4) has a transmission ratio of 1.

3. Flow rate regulator according to Claim 1 or 2, **characterized in that** the float (2) is mounted so as to be displaceable in a guide (3), in particular a slide guide.

4. Flow rate regulator according to Claim 3, **characterized in that** the float (2) is mounted so as to be displaceable exclusively vertically in the guide (3) or is mounted so as to be displaceable exclusively vertically in a first lifting region (45) and is mounted so as to be displaceable vertically superimposed with a horizontal movement in a second lifting region (46).

5. Flow rate regulator according to one of Claims 1 to 4, **characterized in that** the second traction drive (4) has at least two portions (26, 27; 28) of the traction means (25) deflected by means of wheels (20, 21, 22, 23, 24, 47, 48), wherein one portion (28) of the portions (26, 27; 28) is arranged horizontally, in order to create a horizontal spacing from the region of the float (2) to the region of the screen (7) and of the first traction drive (4).

6. Flow rate regulator according to Claim 5, **characterized in that** the horizontal portion (28) passes through a tube (42).

7. Flow rate regulator according to one of Claims 1 to 6, **characterized in that** the traction means (25) of the second traction drive (4) has traction-means portions (26, 27; 28, 28) that extend in parallel in a horizontally extending region (28) and/or in a vertically extending region (26, 27) and/or in an obliquely extending region (46), apart from the region of the wheels (20, 21, 22, 23, 24, 47, 48) of this traction drive (4).

8. Flow rate regulator according to one of Claims 1 to 7, **characterized in that** the first traction drive (5) and/or the second traction drive (4) is/are configured as a chain drive.

9. Flow rate regulator according to one of Claims 1 to 8, **characterized in that** a wheel (24) of the second traction drive (4) and the first wheel (11) of the first traction drive (5) have the same rotation axis (14) and are connected together so as to rotate as one.

10. Flow rate regulator according to one of Claims 1 to 9, **characterized in that** the first traction drive (5) has a transmission ratio from 1.5 to 3.5, preferably from 2 to 3, in particular of 2.5.

11. Flow rate regulator according to one of Claims 1 to 10, **characterized in that** the axes (14, 15) of the wheels (11, 12) of the first traction drive (5) and/or the axes (14, 30) of the wheels (20, 21, 22, 23, 24, 47, 48) of the second traction drive (4) are in a fixed position.

12. Flow rate regulator according to one of Claims 1 to 11, **characterized in that** a control element (6) is connected to the second wheel (12) of the first traction drive (5), wherein the control element (6) has a control curve (16), and, via a transmission means (8, 17), a pivoting movement of the control curve (16) is converted into a lifting movement of the screen (7), and in particular the control curve (16) extends through an angle of at least 360° with respect to a rotation axis (15) of the control disc (6).

13. Flow rate regulator according to one of Claims 1 to 11, **characterized in that** the screen (7) is connected directly to the second wheel (12), wherein the pivoting angles of the screen (7) and the second wheel (12) when driven by the float (2) are identical, and the screen (7) has a control edge (50) for variably screening off the outlet depending on the pivoted position of the screen (7).

14. Flow rate regulator according to one of Claims 1 to 13, **characterized in that** the control element (6) or the screen (7) is releasable from the second wheel (12) and is able to be connected to the second wheel (12) in different positions.

15. Flow rate regulator according to one of Claims 1 to 14, **characterized in that** the float (2) is located, in its completely lowered position, with its lower boundary at a lower level, with respect to a vertical, than the lower boundary of the screen (7) and/or the lower boundary of an outlet opening (10) of the liquid container (36).

## Revendications

1. Régulateur de débit d'écoulement (1) pour une sortie d'un réservoir de liquide (36), en particulier pour la sortie d'un bassin, avec un flotteur (2), une première transmission par moyen de traction (5) et un obturateur (7), dans lequel la première transmission par moyen de traction (5) présente un moyen de traction (13) et deux roues (11, 12) coopérant avec celui-ci, dans lequel ladite une première roue (11) peut être entraînée au moyen du flotteur (2) et l'obturateur (7) peut être entraîné par l'autre deuxième roue (12), **caractérisé en ce que** la première transmission par moyen de traction (5) présente un rapport de transmission supérieur à 1, et le régulateur de débit d'écoulement (1) présente une deuxième transmission par moyen de traction (4) pour transmettre le mouvement du flotteur (2) à la première roue (11), dans lequel le flotteur (2) est attaché de façon fixe à un moyen de traction (25) de la deuxième transmission par moyen de traction (4).

2. Régulateur de débit d'écoulement selon la revendication 1, **caractérisé en ce que** la deuxième transmission par moyen de traction (4) présente un rapport de transmission égal à 1.

3. Régulateur de débit d'écoulement selon la revendication 1 ou 2, **caractérisé en ce que** le flotteur (2) est monté de façon mobile dans un guide (3), en particulier un guide de chariot.

4. Régulateur de débit d'écoulement selon la revendication 3, **caractérisé en ce que** le flotteur (2) est monté de façon mobile exclusivement verticalement dans le guide (3) ou il est monté de façon mobile exclusivement verticalement dans une première partie de course (45) et est monté de façon mobile verticalement et horizontalement en superposition dans une deuxième partie de course (46).

5. Régulateur de débit d'écoulement selon l'une quelconque des revendications 1 à 4, **caractérisé en ce que** la deuxième transmission par moyen de traction (4) présente au moins deux parties (26, 27; 28) du moyen de traction (25) dévié au moyen de roues (20, 21, 22, 23, 24, 47, 48), dans lequel une partie (28) des parties (26, 27; 28) est disposée horizontalement, pour la création d'une distance horizontale depuis la région du flotteur (2) jusqu'à la région de l'obturateur (7) et de la première transmission par moyen de traction (4).

6. Régulateur de débit d'écoulement selon la revendication 5, **caractérisé en ce que** la partie horizontale (28) traverse un tube (42).

7. Régulateur de débit d'écoulement selon l'une quelconque des revendications 1 à 6, **caractérisé en ce que** le moyen de traction (25) de la deuxième transmission par moyen de traction (4) présente dans une région s'étendant horizontalement (28) et/ou dans une région s'étendant verticalement (26, 27) et/ou dans une région s'étendant en oblique (46), excepté la région des roues (20, 21, 22, 23, 24, 47, 48) de cette transmission par moyen de traction (4), des parties de moyen de traction s'étendant parallèlement (26, 27; 28, 28).

8. Régulateur de débit d'écoulement selon l'une quelconque des revendications 1 à 7, **caractérisé en ce que** la première transmission par moyen de traction (5) et/ou la deuxième transmission par moyen de traction (4) est/sont réalisée(s) en forme de transmission par chaîne.

9. Régulateur de débit d'écoulement selon l'une quelconque des revendications 1 à 8, **caractérisé en ce qu'**une roue (24) de la deuxième transmission par moyen de traction (4) et la première roue (11) de la première transmission par moyen de traction (5) présentent le même axe de rotation (14) et sont assemblées l'une à l'autre de façon solidaire en rotation.

10. Régulateur de débit d'écoulement selon l'une quelconque des revendications 1 à 9, **caractérisé en ce que** la première transmission par moyen de traction (5) présente un rapport de transmission de 1,5 à 3,5, de préférence de 2 à 3, en particulier de 2,5.

11. Régulateur de débit d'écoulement selon l'une quelconque des revendications 1 à 10, **caractérisé en ce que** les axes (14, 15) des roues (11, 12) de la première transmission par moyen de traction (5) et/ou les axes (14, 30) des roues (20, 21, 22, 23, 24, 47, 48) de la deuxième transmission par moyen de traction (4) sont stationnaires.

12. Régulateur de débit d'écoulement selon l'une quelconque des revendications 1 à 11, **caractérisé en ce qu'**un élément de commande (6) est relié à la deuxième roue (12) de la première transmission par moyen de traction (5), dans lequel l'élément de commande (6) présente une courbe de commande (16), et un mouvement de pivotement de la courbe de commande (16) est converti par un moyen de transmission (8, 17) en un mouvement de levée de l'obturateur (7), en particulier la courbe de commande (16) s'étend, par rapport à un axe de rotation (15) du disque de commande (6), sur un angle d'au moins 360°.

13. Régulateur de débit d'écoulement selon l'une quelconque des revendications 1 à 11, **caractérisé en ce que** l'obturateur (7) est relié directement à la deuxième roue (12), dans lequel l'angle de pivotement de l'obturateur (7) et celui de la deuxième roue (12) lors de l'entraînement par le flotteur (2) sont identiques, et l'obturateur (7) présente une arête de commande (50) pour l'obturation variable de la sortie selon la position de pivotement de l'obturateur (7).

14. Régulateur de débit d'écoulement selon l'une quelconque des revendications 1 à 13, **caractérisé en ce que** l'élément de commande (6) ou l'obturateur (7) est détachable de la deuxième roue (12) et peut être attaché à la deuxième roue (12) dans différentes positions.

15. Régulateur de débit d'écoulement selon l'une quelconque des revendications 1 à 14, **caractérisé en ce que** dans sa position complètement descendue, le flotteur (2) se trouve avec sa limite inférieure à un niveau plus bas, par rapport à une verticale, que la limite inférieure de l'obturateur (7) et/ou que la limite inférieure d'une ouverture de sortie (10) du réservoir de liquide (36).
